# EUROPÄISCHE PATENTSCHRIFT

(11) **EP 2 403 730 B1**
(45) Veröffentlichungstag und Bekanntmachung des Hinweises auf die Patenterteilung: **21.06.2017**
(21) Anmeldenummer: 10700430.1
(22) Anmeldetag: 19.01.2010
(51) Int. Cl.: B60K 6/12

(54) **VERFAHREN ZUM BETREIBEN EINES HYDRAULIKHYBRIDFAHRZEUGS**
METHOD FOR DRIVING A HYBRID HYDRAULIC VEHICLE
PROCÉDÉ POUR ENTRAÎNER UN VÉHICULE HYDRAULIQUE HYBRIDE

(30) Priorität: 05.03.2009 DE 102009001357
(43) Veröffentlichungstag der Anmeldung: 11.01.2012
(73) Patentinhaber: Robert Bosch GmbH, 70442 Stuttgart (DE)
(72) Erfinder: PITZAL, Volker, 73550 Waldstetten/Wissgoldingen (DE); SCHULZ, Udo, 71665 Vaihingen/Enz (DE)
(86) Internationale Anmeldenummer: PCT/EP2010/050558
(87) Internationale Veröffentlichungsnummer: WO 2010/099996

(56) Entgegenhaltungen:
- WO-A1-2008/139268
- WO-A2-2008/049064
- US-A- 5 579 640

## Beschreibung

### Stand der Technik

Die Erfindung betrifft ein Verfahren zum Betreiben eines Hydraulikhybridfahrzeugs mit einer primären und einer hydraulischen Antriebseinheit, die zum Erzeugen eines positiven oder negativen Drehmoments mit einem Hydraulikmedium betrieben wird, das in verschiedenen Betriebszuständen mit Hilfe der hydraulischen Antriebseinheit aus einem hydropneumatischen Niederdruckspeicher in einen hydropneumatischen Hochdruckspeicher gefördert oder zum Antrieb der hydraulischen Antriebseinheit aus dem hydropneumatischen Hochdruckspeicher in den hydropneumatischen Niederdruckspeicher entlastet wird.

Aus der internationalen Veröffentlichung WO 2006/038968 A1 ist ein Hydraulikhybridantrieb mit einem Hydraulikfluidreservoir bekannt, das mit einem Temperatursensor, einem Niederdruckschalter und einem Reservoirdruckschalter ausgestattet ist.

WO 2008/139268 A1 offenbart ein hydraulisches Antriebssystem mit einem Hochdruckspeicher, der einen Drucksensor aufweist und mit einem Niederdruckspeicher, der einen Füllstandsensor und einen Temperatursensor aufweist.

WO 2008/049064 A2 offenbart ein Fahrzeug mit einem Hydraulikhybrid-Antrieb mit einem Hochdruckspeicher und einem Niederdruckspeicher, die Sensoren zur Erfassung von Messwerten aufweisen.

### Offenbarung der Erfindung

Aufgabe der Erfindung ist es, die Sicherheit und/oder den Fahrkomfort im Betrieb eines Hydraulikhybridfahrzeugs mit einer primären Antriebseinheit und mit einer hydraulischen Antriebseinheit in einem Verfahren gemäß dem Oberbegriff des Anspruchs 1 weiter zu erhöhen.

Die Aufgabe ist bei einem Verfahren zum Betreiben eines Hydraulikhybridfahrzeugs mit einer primären und einer hydraulischen Antriebseinheit, die zum Erzeugen eines positiven oder negativen Drehmoments mit einem Hydraulikmedium betrieben wird, das in verschiedenen Betriebszuständen mit Hilfe der hydrau-lischen Antriebseinheit aus einem hydropneumatischen Niederdruckspeicher in einen hydropneumatischen Hochdruckspeicher gefördert oder zum Antrieb der hydraulischen Antriebseinheit aus dem hydropneumatischen Hochdruckspeicher in den hydropneumatischen Niederdruckspeicher entlastet wird, dadurch gelöst, dass der Druck und/oder die Temperatur beziehungsweise eine Änderung des Drucks und/oder der Temperatur in dem hydropneumatischen Hochdruckspeicher erfasst wird, um das von der hydraulischen Antriebseinheit erzeugte Drehmoment zu überwachen. Bei der primären Antriebseinheit handelt es sich zum Beispiel um eine Brennkraftmaschine. In der hydraulischen Antriebseinheit sind zum Beispiel ein hydraulischer Motor und eine hydraulische Pumpe zusammengefasst. Gemäß einem wesentlichen Aspekt der Erfindung wird die Drehmomentabgabe der hydraulischen Antriebseinheit im Antriebsstrang des Hydraulikhybridfahrzeugs kontinuierlich überwacht, um eine ungewollte Beschleunigung zu vermeiden. Als positive Beschleunigung wird eine normale Beschleunigung bezeichnet, die dazu führt, dass das Hydraulikhybridfahrzeug schneller wird. Als negative Beschleunigung wird ein Abbremsen oder Verzögern des Hydraulikhybridfahrzeugs bezeichnet.

Ein bevorzugtes Ausführungsbeispiel des Verfahrens ist dadurch gekennzeichnet, dass der Druck und/oder die Temperatur beziehungsweise eine Änderung des Drucks und/oder der Temperatur in einer Gasblase des hydropneumatischen Hochdruckspeichers erfasst werden beziehungsweise wird, um das von der hydraulischen Antriebseinheit erzeugte Drehmoment zu über wachen. Bei dem Gas handelt es sich vorzugsweise um Stickstoff. Zur Erfassung des Drucks und/oder der Temperatur ragt ein Druck- beziehungsweise Temperatursensor in die Gasblase.

Erfindungsgemäß ist das Verfahren dadurch gekennzeichnet, dass der Druck und/oder die Temperatur beziehungsweise eine Änderung des Drucks und/oder der Temperatur in dem hydropneumatischen Niederdruckspeicher erfasst werden beziehungsweise wird, um das von der hyd-raulischen Antriebseinheit erzeugte Drehmoment zu überwachen. Erfindungsgemäß werden sowohl der Druck als auch die Temperatur in beiden hydropneumatischen Druckspeichern erfasst.

Ein weiteres bevorzugtes Ausführungsbeispiel des Verfahrens ist dadurch gekennzeichnet, dass der Druck und/oder die Temperatur beziehungsweise eine Änderung des Drucks und/oder der Temperatur in einer Gasblase des hydropneumatischen Niederdruckspeichers erfasst werden beziehungsweise wird, um das von der hydraulischen Antriebseinheit erzeugte Drehmoment zu überwachen. Der hydropneumatische Niederdruckspeicher kann genauso aufgebaut sein wie der hydropneumatische Hochdruckspeicher. Vorzugsweise umfassen die hydropneumatischen Druckspeicher einen Druckbehälter, der mit Hydraulikmedium und einer Gasblase gefüllt ist. Bei dem Hydraulikmedium handelt es sich vorzugsweise um Hydrauliköl.

Ein weiteres bevorzugtes Ausführungsbeispiel des Verfahrens ist dadurch gekennzeichnet, dass bei einem regenerativen Bremsvorgang des Hydraulikhybridfahrzeugs erfasst wird, ob und gegebenenfalls wie stark der Druck und/oder die Temperatur in dem hydropneumatischen Hochdruckspeicher ansteigen beziehungsweise ansteigt und/oder in dem hydropneumatischen Niederdruckspeicher abfallen beziehungsweise abfällt. Dabei werden vorzugsweise der Druck und/oder die Temperatur des Gases in dem jeweiligen Druckspeicher mit Hilfe geeigneter Drucksensoren beziehungsweise Temperatursensoren erfasst, die in die jeweiligen Gasblasen ragen. Wenn das regenerative Bremsen, zum Beispiel durch Pumpbetrieb, nicht ausreicht beziehungsweise der hydropneumatische Hochdruckdruckspeicher sein Druckmaximum erreicht, dann kann der Bremsvorgang zusätzlich durch konventionelles Bremsen unterstützt werden.

Ein weiteres bevorzugtes Ausführungsbeispiel des Verfahrens ist dadurch gekennzeichnet, dass bei einem Wechsel in einen Fahrbetriebszustand, in welchem keine oder keine ungewollt hohe Beschleunigung des Hydraulikhybridfahrzeugs erwünscht ist, und der hydropneumatische Hochdruckspeicher geladen ist, erfasst wird, ob und gegebenenfalls wie stark der Druck und/oder die Temperatur in dem hydropneumatischen Hochdruckspeicher abfallen beziehungsweise abfällt und/oder in dem hydropneumatischen Niederdruckspeicher ansteigen beziehungsweise ansteigt. Bei einer unerwünschten oder unerwünscht hohen Beschleunigung des Hydraulikhybridfahrzeugs durch die hydraulische Antriebseinheit kann diese abgeschaltet werden. Alternativ oder zusätzlich kann eine herkömmliche Bremse aktiviert werden.

Ein weiteres bevorzugtes Ausführungsbeispiel des Verfahrens ist dadurch gekennzeichnet, dass zu einer Überprüfung eines zum Erfassen des Drucks/der Temperatur verwendeten Drucksensors/Temperatursensors die Temperatur/der Druck beziehungsweise Temperaturänderung/Druckänderung während einer Kompression und/oder einer Expansion des hydropneumatischen Hochdruckspeichers erfasst wird. Dabei wird vorzugsweise die Temperatur/der Druck beziehungsweise Temperaturänderung/Druckänderung in der Gasblase erfasst.

Ein weiteres bevorzugtes Ausführungsbeispiel des Verfahrens ist dadurch gekennzeichnet, dass zu einer Überprüfung eines zum Erfassen des Drucks/der Temperatur verwendeten Drucksensors/Temperatursensors die Temperatur/der Druck beziehungsweise Temperaturänderung/Druckänderung während eines Druckhaltevorgangs/Temperaturvorgangs des hydropneumatischen Hochdruckspeichers und/oder des hydropneumatischen Niederdruckspeichers erfasst wird. Dabei wird die Temperatur/der Druck beziehungsweise Temperaturänderung/Druckänderung vorzugsweise in der Gasblase erfasst.

Ein weiteres bevorzugtes Ausführungsbeispiel des Verfahrens ist dadurch gekennzeichnet, dass erst dann in eine andere Betriebsart des Hydraulikhybridfahrzeugs geschaltet wird, wenn der erfasst Druck und/oder die erfasste Temperatur beziehungsweise eine erfasste Änderung des Drucks und/oder der Temperatur in dem hydropneumatischen Hochdruckspeicher und/oder in dem hydropneumatischen Niederdruckspeicher in einem zulässigen Betriebsbereich liegen beziehungsweise liegt. Dabei werden vorzugsweise der Druck und die Temperatur beziehungsweise die jeweiligen Änderungen in der Gasblase erfasst.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

### Kurze Beschreibung der Zeichnung

Es zeigen:
- Figur 1: eine stark vereinfachte schematische Darstellung eines Antriebsstrangs eines Hydraulikhybridfahrzeugs bei einem regenerativen Bremsvorgang;
- Figur 2: die gleiche Darstellung wie in Figur 1 beim Beschleunigen durch eine hydraulische Antriebseinheit und
- Figur 3: einen Lade/Entladevorgang in einem hydropneumatischen Hochdruckspeicher in einem p-V-Diagramm.

### Beschreibung der Ausführungsbeispiele

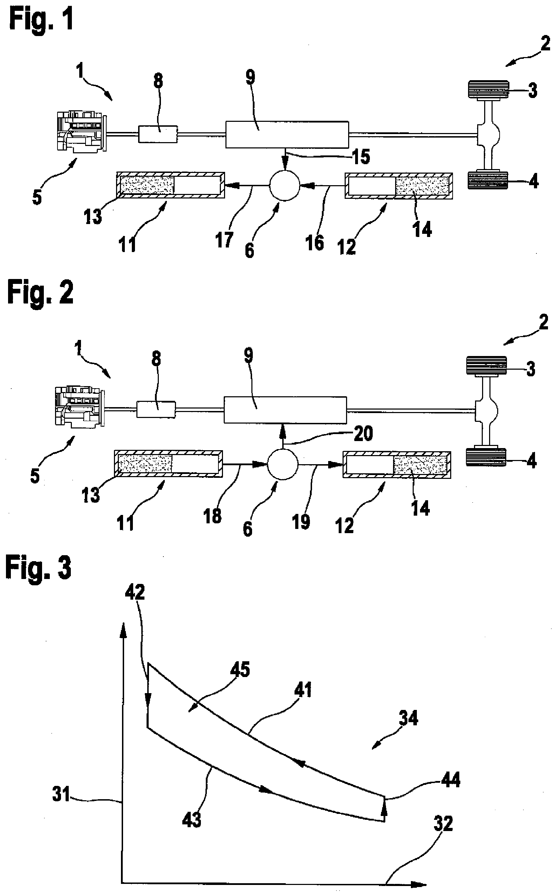

In den Figuren 1 und 2 ist ein Antriebsstrang 1 eines Hydraulikhybridfahrzeugs 2 mit zwei Antriebsrädern 3 und 4 stark vereinfacht dargestellt. Die Antriebsräder 3 und 4 sind über eine primäre Antriebseinheit 5 antreibbar, die im dargestellten Ausführungsbeispiel eine Brennkraftmaschine umfasst. Alternativ oder zusätzlich sind die Antriebsräder 3 und 4 über eine hydraulische Antriebseinheit 6 antreibbar, die zum Beispiel eine hydraulische Pumpe und einen hydraulischen Motor umfasst. Die hydraulische Antriebseinheit 6 kann alternativ auch eine hydraulische Maschine umfassen, die sowohl die Funktion einer hydraulischen Pumpe als auch die Funktion eines hydraulischen Motors ausüben kann.

Ein Getriebe 8 ist zwischen die primäre Antriebseinheit 5 und die Antriebsräder 3, 4 geschaltet. Zwischen das Getriebe 8 und die Antriebsräder 3, 4 ist eine Steuerungs- und Kupplungseinrichtung 9 geschaltet, die zum Beispiel mindestens eine mechanische oder hydrodynamische Kupplung und ein elektronisches Steuergerät umfasst. Über die Steuerungs- und Kupplungseinrichtung 9 ist die hydraulische Antriebseinheit 6 vorzugsweise zusätzlich zu der primären Antriebseinheit 5 mit den Antriebsrädern 3, 4 koppelbar.

Die hydraulische Antriebseinheit 6 ist hydraulisch mit einem Hydraulikmedium betreibbar und zu diesem Zweck hydraulisch zwischen einen hydropneumatischen Hochdruckspeicher 11 und einen hydropneumatischen Niederdruckspeicher 12 geschaltet. Die beiden Druckspeicher 11 und 12 umfassen zusätzlich zu dem Hydraulikmedium jeweils eine Gasblase 13, 14, die zum Beispiel mit Stickstoff gefüllt ist. Derartige hydropneumatische Druckspeicher werden auch kurz als Hydrospeicher bezeichnet. Alternativ können die Druckspeicher 11 und 12 auch als Membranspeicher oder als Kolbenspeicher ausgeführt sein. Hydrospeicher sind in der Lage, ein bestimmtes Flüssigkeitsvolumen unter Druck aufzunehmen und mit geringen Verlusten wieder abzugeben.

In Figur 1 ist durch einen Pfeil 15 angedeutet, dass die hydraulische Antriebseinheit 6 bei einem regenerativen Bremsvorgang über die Antriebsräder 3 und 4 angetrieben wird. Alternativ oder zusätzlich kann die hydraulische Antriebseinheit 6 über die Brennkraftmaschine 5 angetrieben werden. Wenn die hydraulische Antriebseinheit 6, wie in Figur 1 dargestellt, angetrieben wird, dann arbeitet sie als hydraulische Pumpe und fördert, wie durch Pfeile 16 und 17 angedeutet ist, Hydraulikmedium aus dem Niederdruckspeicher 12 in den Hochdruckspeicher 11. Dabei wird die Gasblase 14 in dem Niederdruckspeicher 12 entlastet und die Gasblase 13 in dem Hochdruckspeicher 11 komprimiert.

In Figur 3 ist ein kartesisches Koordinatendiagramm mit einer Y-Achse 31 und einer X-Achse 32 dargestellt, in welchem der Gasdruck p über dem Gasvolumen V beim Laden beziehungsweise Entladen 34 des Hochdruckspeichers 11 aus den Figuren 1 und 2 in Form eines p-V-Diagramms dargestellt ist. Bei dem in Figur 1 dargestellten regenerativen Bremsvorgang wird der Hochdruckspeicher 11 aufgeladen, wie durch einen Pfeil 41 angedeutet ist. Dabei erhöht sich der Druck des Gases in der Gasblase 13 durch Volumenreduzierung. Gleichzeitig steigt die Temperatur des Gases an. In einer durch einen weiteren Pfeil 42 angedeuteten Ruhephase gibt das Gas in der Gasblase 13 Wärme an die Umgebung ab. Dabei sinkt der Druck bei gleich bleibendem Volumen.

In Figur 2 ist durch Pfeile 18, 19 angedeutet, wie der Hochdruckspeicher 11 in den Niederdruckspeicher 12 entladen wird, um die hydraulische Antriebseinheit 6 anzutreiben. Das Entladen des Hochdruckspeichers 11 ist in Figur 3 durch einen weiteren Pfeil 43 angedeutet. Durch einen weiteren Pfeil 20 ist in Figur 2 angedeutet, dass die von der hydraulischen Antriebseinheit 6 bereitgestellte Energie zum Antrieb beziehungsweise Beschleunigen der Antriebsräder 3 und 4 verwendet wird. Durch einen weiteren Pfeil 44 ist in Figur 3 angedeutet, dass der Gasdruck in der Gasblase 13 des Hochdruckspeichers 11 durch Aufnahme von Umgebungswärme in einer weiteren Ruhephase wieder ansteigt. Da die thermischen Verluste in der Ruhephase größer sind als die Gewinne beim Ladevorgang, ist eine Fläche 45 innerhalb der den Lade- beziehungsweise Entladevorgang darstellenden Kennlinie 34 in Figur 3 identisch mit den thermischen Verlusten.

Gemäß einem wesentlichen Aspekt der Erfindung werden beziehungsweise wird der Druck und/oder die Temperatur beziehungsweise die Änderung dieser Größen in der Gasblase 13 des Hochdruckspeichers 11 und optional in der Gasblase 14 des Niederdruckspeichers 12 erfasst und überwacht. Die erfassten Druck- und/oder Temperaturwerte werden im Betrieb des Hydraulikhybridfahrzeugs 2 genutzt, um ungewollte Beschleunigungsvorgänge beziehungsweise ausbleibende Verzögerungen zu erkennen.

In einem Ausführungsbeispiel der Erfindung geht es um die Überwachung auf Verlust oder ausbleibende Verzögerung des Hydraulikhybridfahrzeugs 2 mittels Druck- und optional Temperaturmessung in der Gasblase 13 des Hochdruckspeichers 11 beziehungsweise der Gasblase 14 des Niederdruckspeichers 12. Wenn der Betriebszustand des Hydraulikhybridfahrzeugs 2 in die Betriebsart regeneratives Bremsen wechselt, so muss eine ausreichende Verzögerung des Fahrzeugs gewährleistet sein, um Personen und Güter nicht zu gefährden. Erfindungsgemäß werden im Hochdruck- und optional im Niederdruckspeicher jeweils ein Drucksensor und optional ein Temperatursensor verbaut, die jeweils in die Gasblase ragen. Das Überwachungsverfahren basiert auf der Überwachung von Druck und optional Temperatur beziehungsweise deren Änderung in den Gasblasenspeichern während der Kompression im Hochdruckspeicher und optional der Expansion im Niederdruckspeicher. Bei korrektem regenerativem Bremsvorgang muss sich der Druck und die Temperatur in der Gasblase des Hochdruckspeichers erhöhen und in der Gasblase des Niederdruckspeichers verringern.

Es wird angenommen, dass der Betriebsartenkoordinator in die Betriebsart Verzögerung beziehungsweise Bremsen schaltet. Befindet sich der aktuelle Druck im Hochdruckgasblasenspeicher im zulässigen Betriebsbereich und die Differenz zum maximal zulässigen Druck des Betriebsspeichers ist ausreichend für eine minimal definierte Bremsarbeit, dann wird die Betriebsart regeneratives Bremsen aktiviert. Ansonsten wird die Betriebsart konventionell mechanisch hydraulische Bremsung aktiviert. Die Aktivierung der Betriebsart regeneratives Bremsen aktiviert zugleich auch die erfindungsgemäß folgenden Überwachungs- und Sicherheitsfunktionen.

Eine Drucksensor-Temperatursensor-Plausibilisierung wird wie folgt durchgeführt. Ein Teil der während der Kompression zugeführten Energie äußert sich in einer Erhöhung der Temperatur des Gases im Hochdruckgasblasenspeicher. Ein Teil der während der Expansion abgeführten Energie äußert sich in einer Verringerung der Temperatur im Niederdruckgasblasenspeicher. Um den Drucksensor zu überprüfen, wird erfindungsgemäß die Temperatur während der Kompression und optional der Expansion gemessen. Verglichen wird eine Druckerhöhung (Druckdifferenz/Zeit) mit einer Temperaturerhöhung (Temperaturdifferenz/Zeit) für den Hochdruckgasblasenspeicher und optional eine Druckverringerung (Druckdifferenz/Zeit) mit einer Temperaturverringerung (Temperaturdifferenz/Zeit) für den Niederdruckgasblasenspeicher.

Zur Fehlererkennung und Fehlerreaktion bei einem Sensordefekt wird wie folgt vorgegangen. Befinden sich während der Messung die Absolutwerte von Druck und Temperatur als auch die gepaarten Werte von Druckänderung und Temperaturänderung in einem zulässigen Toleranzband, so ist davon auszugehen, dass die Sensoren statisch wie dynamisch korrekt funktionieren. Andernfalls wird ein Fehler gemeldet und die Betriebsart konventionelle mechanische hydraulische Bremsung aktiviert. Alternativ oder zusätzlich kann eine Kupplung geöffnet werden, um ein ungewolltes Beschleunigen zu verhindern.

Bekanntlich ist die Fläche unter der Kurve von 41 die Kompressionsarbeit und damit proportional zur Bremsarbeit im Hybridfahrzeug mit hydraulischem Motor/Pumpe. Erfindungsgemäß wird der Druck von 41 über die Zeit gemessen, was im Grunde proportional zur Bremsleistung ist. Diese wird mit einer Sollbremsleistung in der Fahrsoftware eines Triebstrangsteuerungsgeräts verglichen. Bei Ausbleiben oder zu geringer Bremsleistung, zum Beispiel infolge einer defekten Pumpe oder eines Lecks im System oder einer defekten Pumpen-Kupplung oder defekten Hydraulik-Ventilen usw., meldet die Überwachungsfunktion einen Fehler und die konventionelle mechanische hydraulische Bremse wird aktiviert. Denkbar ist auch ein komplettes Umschalten auf die konventionelle mechanische hydraulische Bremse oder, dass alternativ die konventionelle mechanische hydraulische Bremse den fehlenden Betrag liefert.

Wechselt der Betriebszustand des Fahrzeugs in eine Betriebsart, in der keine Beschleunigung des Fahrzeugs erwünscht ist, wie zum Beispiel im Schubbetrieb oder bei einem Bremsvorgang und der Gasblasenhochdruckspeicher ist geladen, so muss verhindert werden, dass es zu einer Beschleunigung des Fahrzeugs durch den hydraulischen Motor kommt. Erfindungsgemäß werden im Hochdruck- und optional im Niederdruckspeicher jeweils ein Drucksensor und optional ein Temperatursensor verbaut, die jeweils in die Gasblase ragen. Das Überwachungsverfahren basiert auf der Überwachung von Druck und optional Temperatur beziehungsweise deren Änderung in den Gasblasenspeichern während des Druckhaltens im Hochdruckspeicher und optional im Niederdruckspeicher. Das regenerative Bremsen ist abgeschlossen beziehungsweise nicht aktiv. Ist keine Beschleunigung des Fahrzeugs gewünscht, wie zum Beispiel im Schubbetrieb oder bei einem Bremsvorgang, so darf es unter Berücksichtigung von Wärmeabgabe an die und Wärmeaufnahme aus der Umgebung zu keiner unzulässigen Druckverringerung und optional Temperaturverringerung in der Gasblase des Hochdruckspeichers und zu keiner unzulässigen Druckerhöhung und optional Temperaturerhöhung in der Gasblase des Niederdruckspeichers kommen.

Es wird angenommen, dass der Betriebsartenkoordinator in die Betriebsart Verzögerung beziehungsweise Bremsen schaltet und der Gasblasenhochdruckspeicher geladen ist. Die Aktivierung der Betriebsart Druckhalten aktiviert zugleich auch die erfindungsgemäß folgende Überwachungs- und Sicherheitsfunktion.

Ein Teil der während der Kompression zugeführten Energie äußert sich in einer Erhöhung der Temperatur des Gases im Hochdruckgasblasenspeicher. Andererseits äußert sich ein Teil der während der Expansion abgeführten Energie in einer Verringerung der Temperatur im Niederdruckgasblasenspeicher. Um den Drucksensor zu überprüfen, wird erfindungsgemäß die Temperatur während des Druckhaltens gemessen. Verglichen wird eine zulässige Druckänderung (Druckdifferenz/Zeit) mit einer Temperaturänderung (Temperaturdifferenz/Zeit) für den Hochdruckgasblasenspeicher und optional eine Druckänderung (Druckdifferenz/Zeit) mit einer Temperaturänderung (Temperaturdifferenz/Zeit) für den Niederdruckgasblasenspeicher. Im Fall, dass das Gas im Hochdruckblasenspeicher eine höhere Temperatur als die Umgebung hat, sinken die Temperatur und der Druck in Abhängigkeit von der Temperaturdifferenz, Wärmeübergangskoeffizienten und der Zeit. Im Fall, dass das Gas im Niederdruckblasenspeicher eine niedrigere Temperatur als die Umgebung hat, steigen die Temperatur und der Druck in Abhängigkeit von der Differenztemperatur, Wärmeübergangskoeffizienten und der Zeit.

Zur Fehlererkennung und Fehlerreaktion bei einem Sensordefekt wird wie folgt vorgegangen. Befinden sich während der Messung die Absolutwerte von Druck und Temperatur als auch die gepaarten Werte von Druckänderung und Temperaturänderung in einem zulässigen Toleranzband, so ist davon auszugehen, dass die Sensoren statisch wie dynamisch korrekt funktionieren. Andernfalls wird ein Fehler gemeldet und die Betriebsart regeneratives Bremsen und Beschleunigen mittels Hydraulikmotor nicht mehr zugelassen.

Erfindungsgemäß wird im Steuergerät der Wärmeübergang im Hochdruck- und optional im Niederdruckgasblasenspeicher berechnet beziehungsweise abgeschätzt. Dazu wird die Temperatur der Umgebung des Gases gemessen oder durch ein Temperaturmodell aus anderen Messgrößen im System hergeleitet, zum Beispiel Umgebungstemperatur, Öltemperatur und dergleichen. Die Wärmeleitkoeffizienten der Materialien sind bekannt. Die Zeit des Druckhaltens kann durch das Steuergerät selbst gemessen werden. Unter Berücksichtigung von zulässiger Leckage im Hydrauliksystem sollten der Druck- und der Temperaturabfall im Hochdruckspeicher einen bestimmten Betrag nicht überschreiten. Unter zusätzlicher Berücksichtigung von zulässiger Leckage im Hydrauliksystem sollten der Druck- und der Temperaturanstieg im Niederdruckspeicher einen bestimmten Betrag nicht überschreiten.

Im Fall, dass der Betrag für den Hoch- und für den Niederdruckgasblasenspeicher überschritten werden und nicht eindeutig von einer vom Triebstrang getrennten Kupplung des Hydraulikmotors ausgegangen werden kann, ist von einer ungewollten Beschleunigung auszugehen. In diesem Fall ist ein Fehler zu melden und/oder die konventionelle mechanische hydraulische Bremse zu aktivieren und/oder zusätzliche Lasten am Triebstrang zuzuschalten und/oder der Gasblasenhochdruckspeicher drucklos zu schalten.

Im Fall, dass der Betrag nur für den Hochdruckgasblasenspeicher überschritten wird, muss von einem Leck oder einer Leckage im Hydrauliksystem ausgegangen werden. Ein Fehler ist zu melden und der/die hydraulische Motor/Pumpe inaktiv zu schalten.

Bei der Aufrechterhaltung einer Konstantfahrt oder Beschleunigung unterstützt durch den hydraulischen Motor und dessen Anteil am Vortrieb darf es nicht zu einem ungewollt hohen Beitrag und damit einer ungewollten Beschleunigung des Fahrzeugs kommen.

Ein Teil der während der Expansion abgeführten Energie äußert sich in einer Verringerung der Temperatur des Gases im Hochdruckgasblasenspeicher. Andererseits äußert sich ein Teil der während der Kompression zugeführten Energie in einer Erhöhung der Temperatur im Niederdruckgasblasenspeicher. Um den Drucksensor zu überprüfen, wird erfindungsgemäß die Temperatur während der Expansion und optional der Kompression gemessen. Verglichen wird eine Druckverringerung (Druckdifferenz/Zeit) mit einer Temperaturverringerung (Temperaturdifferenz/Zeit) für den Hochdruckgasblasenspeicher und optional eine Druckerhöhung (Druckdifferenz/Zeit) mit einer Temperaturerhöhung (Temperaturdifferenz/Zeit) für den Niederdruckgasblasenspeicher.

Befinden sich während der Messung die Absolutwerte von Druck und Temperatur als auch die gepaarten Werte von Druckänderung und Temperaturänderung in einem zulässigen Toleranzband, so ist davon auszugehen, dass die Sensoren statisch wie dynamisch korrekt funktionieren. Andernfalls wird ein Fehler gemeldet und der hydraulische Motor vom Triebstrang abgeschaltet.

Bekannt ist die Fläche unter der Kurve 43 die Expansionsarbeit und damit proportional zum Arbeitsanteil des hydraulischen Motors im Hybridfahrzeug. Erfindungsgemäß wird der Druck von 43 über der Zeit gemessen, was im Grunde proportional zur abgegebenen Leistung des hydraulischen Motors im Hybridfahrzeug ist. Diese wird mit einer zulässigen Leistung in der Fahrsoftware des Triebstrangsteuergeräts verglichen. Bei zu hoher Leistung, zum Beispiel infolge eines defekten Motors oder defekten Hydraulik-Ventilen usw. meldet die Überwachungsfunktion einen Fehler und der hydraulische Motor wird regulär abgeschaltet und/oder die konventionelle mechanische hydraulische Bremse wird aktiviert. Denkbar ist ein komplettes Umschalten auf den Verbrennungsmotor. Alternativ wird die Leistung des Verbrennungsmotors um den zu hohen Betrag des Hydraulikmotors reduziert.

Die proportionalen, insbesondere nicht linearen, Zusammenhänge zwischen den physikalischen Größen in den beschriebenen Wirkketten werden zum Beispiel in Kennlinien beziehungsweise Kennfelder appliziert. Bei physikalischen Zusammenhängen mittels Polynomen müssen die Polynomparameter appliziert werden.

Die Applikation erfolgt meist anhand einer Referenz (Fahrzeug, Prüfstand) und berücksichtigt auch zulässige Toleranzen.

## Patentansprüche

1. Verfahren zum Betreiben eines Hydraulikhybridfahrzeugs (2) mit einer primären (5) und einer hydraulischen (6) Antriebseinheit, die zum Erzeugen eines positiven oder negativen Drehmoments mit einem Hydraulikmedium betrieben wird, das in verschiedenen Betriebszuständen mit Hilfe der hydraulischen Antriebseinheit (6) aus einem hydropneumatischen Niederdruckspeicher (12) in einen hydropneumatischen Hochdruckspeicher (11) gefördert oder zum Antrieb der hydraulischen Antriebseinheit (6) aus dem hydropneumatischen Hochdruckspeicher (11) in den hydropneumatischen Niederdruckspeicher (12) entlastet wird, **dadurch gekennzeichnet, dass** der Druck und/oder die Temperatur beziehungsweise eine Änderung des Drucks und/oder der Temperatur in dem hydropneumatischen Hochdruckspeicher (11) und in dem hydropneumatischen Niederdruckspeicher (12) erfasst werden beziehungsweise wird, um das von der hydraulischen Antriebseinheit (6) erzeugte Drehmoment zu überwachen.

2. Verfahren nach Anspruch 1, **dadurch gekennzeichnet, dass** der Druck und/oder die Temperatur beziehungsweise eine Änderung des Drucks und/oder der Temperatur in einer Gasblase (13) des hydropneumatischen Hochdruckspeichers (11) erfasst werden beziehungsweise wird, um das von der hydraulischen Antriebseinheit (6) erzeugte Drehmoment zu überwachen.

3. Verfahren nach einem der vorhergehenden Ansprüche, **dadurch gekennzeichnet, dass** der Druck und/oder die Temperatur beziehungsweise eine Änderung des Drucks und/oder der Temperatur in einer Gasblase (14) des hydropneumatischen Niederdruckspeichers (12) erfasst werden beziehungsweise wird, um das von der hydraulischen Antriebseinheit (6) erzeugte Drehmoment zu überwachen.

4. Verfahren nach einem der vorhergehenden Ansprüche, **dadurch gekennzeichnet, dass** bei einem regenerativen Bremsvorgang des Hydraulikhybridfahrzeugs (2) erfasst wird, ob und gegebenenfalls wie stark der Druck und/oder die Temperatur in dem hydropneumatischen Hochdruckspeicher (11) ansteigen beziehungsweise ansteigt und/oder in dem hydropneumatischen Niederdruckspeicher (12) abfallen beziehungsweise abfällt.

5. Verfahren nach einem der vorhergehenden Ansprüche, **dadurch gekennzeichnet, dass** bei einem Wechsel in einen Fahrbetriebszustand, in welchem keine oder keine ungewollt hohe Beschleunigung des Hydraulikhybridfahrzeugs (2) erwünscht ist, und der hydropneumatische Hochdruckspeicher (11) geladen ist, erfasst wird, ob und gegebenenfalls wie stark der Druck und/oder die Temperatur in dem hydropneumatischen Hochdruckspeicher (11) abfallen beziehungsweise abfällt und/oder in dem hydropneumatischen Niederdruckspeicher (12) ansteigen beziehungsweise ansteigt.

6. Verfahren nach einem der vorhergehenden Ansprüche, **dadurch gekennzeichnet, dass** zu einer Überprüfung eines zum Erfassen des Drucks/der Temperatur verwendeten Drucksensors/Temperatursensors die Temperatur/der Druck beziehungsweise Temperaturänderung/Druckänderung während einer Kompression und/oder einer Expansion des hydropneumatischen Hochdruckspeichers (11) erfasst wird.

7. Verfahren nach einem der vorhergehenden Ansprüche, **dadurch gekennzeichnet, dass** zu einer Überprüfung eines zum Erfassen des Drucks/der Temperatur verwendeten Drucksensors/Temperatursensors die Temperatur/der Druck beziehungsweise Temperaturänderung/Druckänderung während eines Druckhaltevorgangs des hydropneumatischen Hochdruckspeichers (11) und/oder des hydropneumatischen Niederdruckspeichers (12) erfasst wird.

8. Verfahren nach einem der vorhergehenden Ansprüche, **dadurch gekennzeichnet, dass** erst dann in eine andere Betriebsart des Hydraulikhybridfahrzeugs (2) geschaltet wird, wenn der erfasste Druck und/oder die erfasste Temperatur beziehungsweise eine erfasste Änderung des Drucks und/oder der Temperatur in dem hydropneumatischen Hochdruckspeicher (11) und/oder in dem hydropneumatischen Niederdruckspeicher (12) in einem zulässigen Betriebsbereich liegen beziehungsweise liegt.

## Claims

1. Method for operating a hydraulic hybrid vehicle (2) having a primary drive unit (5) and a hydraulic drive unit (6), which, to generate a positive or negative torque, is operated with a hydraulic medium which, in different operational states, is delivered from a hydropneumatic low-pressure accumulator (12) into a hydropneumatic high-pressure accumulator (11) with the aid of the hydraulic drive unit (6) or discharged from the hydropneumatic high-pressure accumulator (11) into the hydropneumatic low-pressure accumulator (12) in order to drive the hydraulic drive unit (6), **characterized in that** the pressure and/or the temperature or a change in the pressure and/or the temperature in the hydropneumatic high-pressure accumulator (11) and in the hydropneumatic low-pressure accumulator (12) are or is detected in order to monitor the torque generated by the hydraulic drive unit (6).

2. Method according to Claim 1, **characterized in that** the pressure and/or the temperature or a change in the pressure and/or the temperature in a gas bubble (13) of the hydropneumatic high-pressure accumulator (11) are or is detected in order to monitor the torque generated by the hydraulic drive unit (6).

3. Method according to one of the preceding claims, **characterized in that** the pressure and/or the temperature or a change in the pressure and/or the temperature in a gas bubble (14) of the hydropneumatic low-pressure accumulator (12) are or is detected in order to monitor the torque generated by the hydraulic drive unit (6).

4. Method according to one of the preceding claims, **characterized in that**, during a regenerative braking operation of the hydraulic hybrid vehicle (2), the system detects whether and, if appropriate, how much the pressure and/or the temperature in the hydropneumatic high-pressure accumulator (11) rise or rises and/or whether and, if appropriate, how much they/it fall or falls in the hydropneumatic low-pressure accumulator (12).

5. Method according to one of the preceding claims, **characterized in that**, in the event of a change to a driving operational state in which no acceleration or no unintentionally high acceleration of the hydraulic hybrid vehicle (2) is desired and the hydropneumatic high-pressure accumulator (11) is charged, the system detects whether and, if appropriate, how much the pressure and/or the temperature in the hydropneumatic high-pressure accumulator (11) fall or falls and/or whether and, if appropriate, they/it rise or rises in the hydropneumatic low-pressure accumulator (12).

6. Method according to one of the preceding claims, **characterized in that**, to check a pressure sensor/temperature sensor used to detect the pressure/temperature, the temperature/pressure or temperature change/pressure change is detected during a compression and/or an expansion of the hydropneumatic high-pressure accumulator (11).

7. Method according to one of the preceding claims, **characterized in that**, to check a pressure sensor/temperature sensor used to detect the pressure/temperature, the temperature/pressure or temperature change/pressure change is detected during a pressure-holding operation of the hydropneumatic high-pressure accumulator (11) and/or of the hydropneumatic low-pressure accumulator (12).

8. Method according to one of the preceding claims, **characterized in that** a switch is made to a different operating mode of the hydraulic hybrid vehicle (2) only if the detected pressure and/or the detected temperature or a detected change in the pressure and/or the temperature in the hydropneumatic high-pressure accumulator (11) and/or in the hydropneumatic low-pressure accumulator (12) are or is in a permissible operating range.

## Revendications

1. Procédé pour entraîner un véhicule hybride hydraulique (2) avec une unité d'entraînement primaire (5) et une unité d'entraînement hydraulique (6), qui fonctionne de manière à générer un couple positif ou négatif avec un fluide hydraulique qui est refoulé dans divers états de fonctionnement à l'aide de l'unité d'entraînement hydraulique (6) depuis un accumulateur basse pression hydropneumatique (12) dans un accumulateur haute pression hydropneumatique (11) ou qui est détendu pour l'entraînement de l'unité d'entraînement hydraulique (6) depuis l'accumulateur haute pression hydropneumatique (11) dans l'accumulateur basse pression hydropneumatique (12), **caractérisé en ce que** la pression et/ou la température, respectivement une variation de la pression et/ou de la température dans l'accumulateur haute pression hydropneumatique (11) et dans l'accumulateur basse pression hydropneumatique (12) est/sont détectée(s) afin de surveiller le couple généré par l'unité d'entraînement hydraulique (6).

2. Procédé selon la revendication 1, **caractérisé en ce que** la pression et/ou la température, respectivement une variation de la pression et/ou de la température est/sont détectée (s) dans une soufflante à gaz (13) de l'accumulateur haute pression hydropneumatique (11), afin de surveiller le couple généré par l'unité d'entraînement hydraulique (6).

3. Procédé selon l'une quelconque des revendications précédentes, **caractérisé en ce que** la pression et/ou la température, respectivement une variation de la pression et/ou de la température est/sont détectées dans une soufflante à gaz (14) de l'accumulateur basse pression hydropneumatique (12) afin de surveiller le couple généré par l'unité d'entraînement hydraulique (6).

4. Procédé selon l'une quelconque des revendications précédentes, **caractérisé en ce que** dans le cas d'une opération de freinage régénératif du véhicule hybride hydraulique (2), on détecte si et éventuellement dans quelle mesure la pression et/ou la température augmente(nt) dans l'accumulateur haute pression hydropneumatique (11) et/ou diminue(nt) dans l'accumulateur basse pression hydropneumatique (12).

5. Procédé selon l'une quelconque des revendications précédentes, **caractérisé en ce qu'**en cas de changement dans un état de fonctionnement de conduite dans lequel aucune accélération ou aucune accélération trop élevée du véhicule hybride hydraulique (2) n'est souhaitée, et dans lequel l'accumulateur haute pression hydropneumatique (11) est chargé, on détecte si et éventuellement dans quelle mesure la pression et/ou la température diminue(nt) dans l'accumulateur haute pression hydropneumatique (11) et/ou augmente(nt) dans l'accumulateur basse pression hydropneumatique (12).

6. Procédé selon l'une quelconque des revendications précédentes, **caractérisé en ce que** pour contrôler un capteur de pression/capteur de température utilisé pour détecter la pression/la température, on détecte la température/la pression, respectivement la variation de température/la variation de pression pendant une compression et/ou une détente de l'accumulateur haute pression hydropneumatique (11).

7. Procédé selon l'une quelconque des revendications précédentes, **caractérisé en ce que** pour contrôler un capteur de pression/capteur de température utilisé pour détecter la pression/la température, on détecte la température/la pression, respectivement la variation de température/la variation de pression pendant une opération de maintien de la pression de l'accumulateur haute pression hydropneumatique (11) et/ou de l'accumulateur basse pression hydropneumatique (12).

8. Procédé selon l'une quelconque des revendications précédentes, **caractérisé en ce que** l'on commute seulement dans un autre mode de fonctionnement du véhicule hybride hydraulique (2) si la pression détectée et/ou la température détectée, respectivement une variation détectée de la pression et/ou de la température dans l'accumulateur haute pression hydropneumatique (11) et/ou dans l'accumulateur basse pression hydropneumatique (12) se situe(nt) dans une plage de fonctionnement admissible.
